(19) Europäisches Patentamt
European Patent Office
Office européen des brevets

(11) Publication number: 0 281 311 A2

# (12) EUROPEAN PATENT APPLICATION

(21) Application number: 88301565.3

(51) Int. Cl.⁴: C07F 9/53 , C07F 9/54

(22) Date of filing: 24.02.88

(30) Priority: 24.02.87 GB 8704240

(43) Date of publication of application: 07.09.88 Bulletin 88/36

(84) Designated Contracting States: AT BE CH DE ES FR GB GR IT LI LU NL SE

(71) Applicant: Albright & Wilson Limited
210-222 Hagley Road West
Oldbury Warley West Midlands B68 0NN(GB)

(72) Inventor: Hoye, Peter Albert Theodore
"Tresco" Orchard Grove
Kinver Stourbridge West Midlands DY7 611(GB)

(74) Representative: Wilson, Michael John et al
c/o Albright & Wilson Limited 1
Knightsbridge Green
London SW1X 7QD(GB)

## (54) Phosphine oxide process.

(57) Phosphine oxides in particular bis hydroxymethyl phosphine oxides for use as flame retardants are made by rearrangement of hydroxymethyl phosphonium compounds on heating in aqueous medium with removal of by product aldehyde.

EP 0 281 311 A2

## PHOSPHINE OXIDE PROCESS

This invention concerns phosphine oxides, in particular, processes for making them.

Bis (hydroxymethyl) methyl phosphine oxide (hereafter called BMPO) has been described for use as a reactive P containing compound for flame retarding polyurethanes and polyesters. The compound can be made by thermal rearrangement of tris (hydroxymethyl) phosphine. In Textile Res. J 1982 pp 678-693, and Phosphorus and Sulfur 1978 Vol 5 pp 197-99 A W Frank described attempts to rearrange tetra kis (hydroxymethyl) phosphonium chloride in refluxing acid solution but these either gave negligible conversion to BMPO or further reaction to form significant amounts of haloalkyl products.

We have discovered a method of producing phosphine oxides, in particular methyl bis (hydroxymethyl) phosphine oxide MBPO, from hydroxyalkyl phosphonium salts in high yield.

The present invention provides a process for preparing phosphine oxides in which a hydroxyalkyl phosphonium compound of formula.

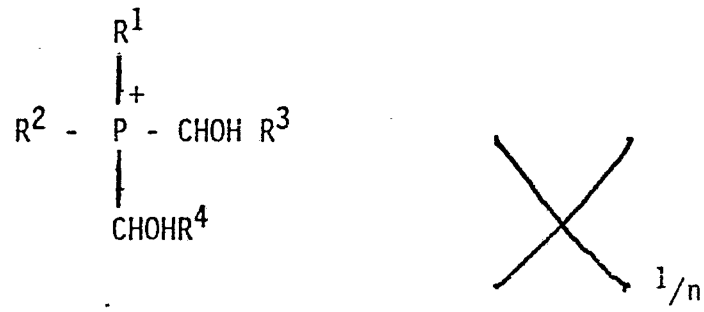

in which $R^1$ represents a monovalent organic group or a group of formula

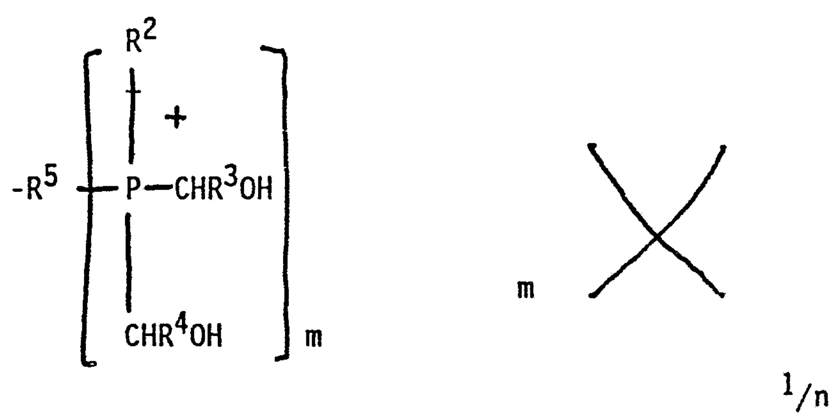

and $R^2$ represents a monovalent organic group or $R^1$ and $R^2$ together form a divalent organic group, each of $R^3$ and $R^4$ which may be the same or different, represents hydrogen or an alkyl group, $R^5$ is an organic group having m + 1 free valencies, m in an integer of at least 1, n is the valency of the anion X, and X represents hydroxyl or an anion from an acid formula $H_n X$ such as an organic acid e.g. a sulphonic acid or an inorganic acid e.g. of basicity of at least 2, is heated at a temperature of at least 120° in an aqueous acid medium, optionally in the presence of an acid e.g. of formula $HY_n$ when Y is selected from the group of anions as is defined for X apart from hydroxyl, with removal of at least some byproduct aldehyde to produce a reaction mixture comprising a phosphine oxide of formula.

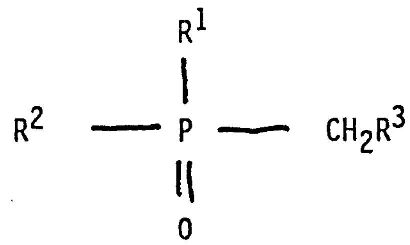

Usually the phosphine oxide is recovered from the reaction mixture. Each of $R^1$ and $R^2$ can represent an organic group which is usually a hydrocarbyl group e.g. of 1-20 carbon atoms which may optionally be substituted by one or more substituents e.g.; hydroxyl, carboxyl, amino or mono or di alkylimino or alkoxy e.g. of 1-14 carbon atoms; any substituent is stable to the acidic reaction conditions. The hydrocarbyl group may be a cycloliphatic one e.g. of 5-7 carbon atoms such as a cyclohexyl or cyclohexyl-aliphatic one e.g. a cyclohexylmethyl group or an aromatic group e.g. of 6-19 carbon atoms such as phenyl or a methyl substituted phenyl group such as tolyl or xylyl or a carboxy substituted phenyl group, or an araliphatic group e.g. of 7-19 carbon atoms such as a benzyl group. Preferably the hydrocarbyl group is an alkyl group e.g. of 1-20 preferably 1-6 carbon atoms such as methyl, ethyl, propyl, butyl, hexyl, octyl, decyl, dodecyl, tetradecyl, lauryl, palmityl or stearyl, or an alkenyl group of 2-20 carbon atoms usually with the olefin group at least 2 carbon atoms from that attached to the phosphorus atom e.g. oleyl, or a cyclohecyl group. Most preferably one or both of $R^1$ and $R^2$ represents a hydroxyalkyl group, usually of 1-6 carbon atoms in particular with a 1-position hydroxyl group substituent; hydroxymethyl groups are preferred.

Both or preferably one of $R^1$ and $R^2$ may also represent a heterocyclic group or heterocyclic alkyl group in particular one in which the hetero atom is one or more nitrogen or sulphur atoms with 1-3 heterocyclic rings and 0-2 hydrocarbyl eg aromatic rings; such a heterocyclic or heterocyclic alkyl group may contain 4-16 carbon atoms and have the or each ring hetero atom in a fully unsaturated ring eg as in pyridine or quinoline. The heterocyclic alkyl group preferably contains 1-4 carbon atoms in the alkyl group eg methyl such as in the 2 pyridinylmethyl group. When $R^1$ contains a heterocycle, $R^2$ is preferably alkyl or hydroxyalkyl eg hydroxymethyl.

$R^1$ and $R^2$ together can represent a divalent organic group eg of 4-14 carbon atoms usually with the free valencies separated by a chain of 4-8 carbon atoms. Examples of such groups are alkylene ones and aralkylene ones e.g. 1,5 - pentylene, 1,6 - hexylene and o -xylylene, 1,5 cyclo-octylene and/or 1,4 cyclo-octylene (as in the phosphine compound made by reaction of cyclooctadiene and phosphine)

$R^1$ can also represent a group of formula

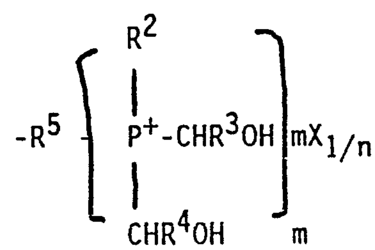

in which $R^5$ maybe a divalent organic group e.g. of 1-14 carbon atoms such as alkylene or alkylidene of 1-8 carbon atoms especially alpha omega alkylene such as methylene, 1,2 ethylene, 1,3 propylene and 1,6 hexylene or arylene e.g. of 6-13 carbon atoms such as 1,4 phenylene, 1,2 phenylene or aralkylene of 8-14 carbons such as 1,4 xylylene. $R^5$ may also be an at least trivalent eg polyvalent group such as a polymeric chain, in particular with a hydrocarbon chain backbone, so that the phosphonium groups are joined directly or via alkylene eg methylene bridges or phenylene alkylene eg benzylylene bridges to the chain atoms. Examples of such chains are those of polystyrene, and co/polymers of styrene and divinyl benzene in particular ones with methylene bridges between the phosphonium groups and the aromatic rings.

When $R^1$ and $R^2$ both contain hydroxyl groups, the product can be a bis (hydroxy organic) alkyl phosphine oxide, in particular MBPO which is made from tetra kis (hydroxymethyl) phosphonium compounds (hereafter called THP compounds). Such products can be used as reactive additives for polymers, e g for flame retardance, adhesion promoters for metal surfaces, metal extractants, metal co-ordinating agents, oxidation stabilizers or as intermediates for surfactants (eg as described in USP 3732316)

When one of $R^1$ and $R^2$ is an organic group free of hydroxyl substituents and the other contains a hydroxyl group, the products can be organic (hydroxyorganic) alkyl phosphine oxides and may be used as metal extractants or metal coordinating agents or as additives for polymers or adhesion promoters for metal surfaces.

When both $R^1$ and $R^2$ are free of hydroxyl groups, the products can be di (organic) alkyl phosphine oxides or cyclo-organic alkyl phosphine oxides each of which may be used as additives for polymers or as metal extractants.

When $R^1$ and $R^2$ are different, the products obtained can exist in optically active forms which may be resolved.

Each of the groups $R^3$ and $R^4$ which may be the same or different represents hydrogen or an alkyl group of 1-6 carbon atoms such as methyl or ethyl. Preferably both represent hydrogen atoms.

When the phosphonium compound contains the group $R^5$, the starting compounds contain at least two phosphonium groups and, when $R^5$ represents a polymeric chain, the compounds are polymeric phosphonium compounds.

The acidic reaction medium is usually substantially non oxidizing and preferably non reducing. The anion X may be a hydroxyl group as in the product known as THP "hydroxide" whatever its chemical nature and in this case the compound is heated in the acidic medium. Preferably however, the anion X is derived from an acid which may be organic or inorganic and is preferably strong e.g. preferably has a $pK_a$ of less than 3 and, usually less than 1 such as 1 to -4. Among organic acids are organic carboxylic acids such as alkane carboxylic acids of 2-6 carbon atoms such as acetic acid or propionic acids and their halosubstituted derivatives stable to the reaction conditions such as chloroacetic and trifluoroacetic acid. However, preferred organic acids are organic sulphonic or phosphonic acids e.g. of 1-13 carbon atoms such as alkane sulphonic acids of 1-6 carbon atoms e.g. methane sulphonic acid or aromatic sulphonic acid of 6-13 carbon atoms such as benzene-, toluene-,or xylene-sulphonic acids; the corresponding phosphonic acids may also be used as may hydroxymethyl phosphonic acid. The anion X may also be derived from an inorganic acid, in particular a strong acid such as an oxy acid particularly of an element in its highest valency state and especially a non metallic element of Group VB or VIB of the Periodic Table with atomic number of at least 15, such as phosphorus or sulphur. The inorganic acid may have a basicity of one as with a hydrohalic acid such as hydrochloric acid, though halide ion is most preferably absent. Especially the basicity of the acid whose anion is X is at least 2 e.g. 2-4 such as 2 or 3. The acid is usually one whose anions are at most only weakly nucleophilic preferably less nucleophilic than chloride ion. The acid is also one which will not oxidize or reduce the starting materials or products under the reaction conditions and preferably will not react with byproduct aldehyde under the reaction conditions to form undesirable byproducts. Oxidizing anions X or Y such as nitrate and oxyhalo anions such as perchlorate are thus usually absent. Thus anions from inorganic strong di or tri basic non oxidizing acids are preferred for X such as phosphoric or especially sulphuric acid. The anion may be an acid salt as in THP acid sulphate and/or THP acid phosphate or may have no replaceable hydrogen atoms as in THP sulphate. The acid itself is preferably liquid.

The hydroxymethyl phosphonium compounds used as starting materials for the process may be made by reaction of a phosphine with aldehydes of formula $R^3CHO$ and $R^4CHO$ in the presence of an acid HX. Where the group $R^1$ is an 1-hydroxy alkyl group, the phosphine is of formula $R^2PH_2$, and when both groups $R^1$ and $R^2$ are 1 hydroxy alkyl groups, phosphine itself is used. Thus the preferred phosphonium compound THP sulphate is made by reacting phosphine, formaldehyde and sulphuric acid in water to give an aqueous solution of THP sulphate e.g. of 60-80% concentration. These reactions may be performed at 50-110°C such as 50-70°C. Phosphonium compounds in which $R^2$, $CHR^3OH$ and $CHR^4OH$ are the same may be made by reacting a phosphine of formula $P(CHR^3OH)_3$ eg a tris hydroxymethyl phosphine with an organic halide $R^1X$ eg benzyl chloride or a halide of formula $R^5Z_{m+1}$ where Z is a halide; thus chloromethylated polystyrene or styrene divinyl benzene copolymer can be reacted with tri hydroxy methyl phosphine to form a polystyrene having pendant trishydroxymethyl phosphonium methylene phenylene groups.

The phosphonium compound in which anion X represents group Y can be heated in the initial absence of added acid, or the phosphonium compound in which anion X represents Y or hydroxyl can be initially in the acid whose anion Y may be the same or different from X; thus THP sulphate can be heated alone e.g. in aqueous solution or heated in aqueous sulphuric acid or in aqueous phosphoric acid solution, and phosphonium chlorides e.g. THP chloride may be heated alone or in sulphuric or phosphoric acid solution. Preferably the nucleophilicity of anion Y is the same as or less than that of X. The reaction medium can initially contain 20-85% e.g. 50-80% by weight of the phosphonium group, the upper limit depending on the nature of the anion. The reaction medium can contain at the start substantially no acid e.g. be at pH6-7 or up to 60% such as at least 10% e.g. 20-60% such as 30-50% or 15-30% by weight of the acid. The molar

ratio of added acid to phosphonium group in the phosphonium compound is usually 0 or up to 5:1 e.g. 0.1:1 to 0.5:1 or 0.5:1 to 3:1. The reaction is preferably performed by heating an aqueous solution of the phosphonium salt in which anion X represents group Y without initial added acid, as the reaction produces acid as a byproduct as it proceeds.

The reaction is usually performed with the phosphonium compound initially in solution e.g. in water or in the added acid and conveniently the source of the phosphonium salt is the concentrated aqueous solution e.g. of 50-80% strength such as is commercially available for THP sulphate. Polymeric phosphonium compounds are reacted usually in suspension in water or preferably aqueous acid. The reaction is usually performed at a temperature of at least 120°C such as 120-250°C or 120-180°C such as at least 130°C e.g. 130-to 180° or 170°C, and especially 135-155°, with a reaction time of 5-300 hr usually 5-50 hrs e.g. 10-40 hrs at 130-150°C or 5-20 hours at 140°C to 180°C e.g.140-175°C or 140-170°C. Conveniently the process is performed at atmospheric pressure with partial reflux of water and by product formaldehyde or other aldehyde of formula $R^4CHO$; however preferably water and by product aldehyde are distilled off with periodic or continuous replacement of removed water and aldehyde by addition of water to the reaction medium to maintain substantially constant reaction temperature. Entrainment with water is especially important for removal of formaldehyde. If desired the aldehyde can be removed by steam distillation. The removal of by product aldehyde, which is preferably as quickly as possible and especially as fast as it is formed, enhances the reaction rate and reduces the production of undesirable phosphorus containing byproducts. If preferred the reaction may be performed under superatmospheric pressure e.g. of 1-50 bar eg 5-20 bar in order to increase the temperature and usually to enhance the removal (if desired) of the byproduct aldehyde. Particularly with reactions under pressure but also under atmospheric pressure if possible, the reaction may be performed at 140-250°C e.g. 140-200°C and is preferably performed in dilute solution e.g. of 20-66% such as 30-50% concentration of phosphonium group and with a molar ratio of added acid to phosphonium group of 0 to up to 0.5:1 and a molar ratio of total anions X and Y to phosphonium group of 0.33 - 3:1 eg 0.5:1 to 2:1 suchas 0.5:1 to 1.1:1. Such dilute processes may be particularly useful with phosphonium sulphates and phosphates and especially chlorides.

Particularly for dilute processes with phosphonium halides, and (if added) hydrohalic acid, especially chloride processes, the concentrations of initial phosphonium halide, and (if added) acid, are such that the solution at the end of the reaction contains less than 20% by weight of chloride values eg hydrochloric acid (or equimolar equivalents of the other hydrohalic acids) such as 1 - 15% or 2 - 10% preferably 2 - 5%. At the end of a halide free process e.g. one with sulphuric or phosphoric acid as $H_nX$ and if present $H_nY$, the concentration of groups derived from anion X and (if present Y), usually the concentration of acid, in the solution is preferably 5-60% such as 15-60% e.g. 15-30% or 30-50%. These concentrations may be those equivalent to the anion concentration at the start of the reaction (when no water is lost during the reaction) or may be equivalent to the anion concentration during the reaction when water is removed with aldehyde but some is returned.

Thus preferably the amount of phosphonium compound anion X, anion Y if present and water are such that the molar amount of water to total groups derived from the anion in the reaction solution is maintained during the reaction above 0.5:1 eg 0.5 - 35:1. The optimum molar amount varies with the nature of the anion, but with anions containing one or more $P\text{-}O^-$ groups such as phosphate, phosphonate and phosphinate, ratios usually of water to free anion, are usually 0.5 - 10:1 such as 3-10:1 or 0.5:1 to 5:1 eg 0.5 - 3:1 or 1-3:1. With anions containing one or more $S\text{-}O^-$ groups such as sulphate, sulphonate and sulphinate, preferred molar ratios of water to total groups from the anion preferably water to free anion are usually at least 0.5:1 eg 0.5-25:1 such as 3.3-25:1 eg 3.3-11:1, 4-10:1 or 5-11:1 but preferably 1-8.5:1 eg 1-5:1. With anions containing $C\text{-}o^-$ groups or oxygen free anions such as halides eg chloride, preferred molar ratios of water to total groups from the anion preferably water to free anion are at least 10:1 eg 12-32:1 or 12-19:1. In the case of anions X or Y whose acids in water have boiling points under atmospheric pressure of 140-200°C eg 140-170°C such as phosphoric and sulphuric acids, the process is preferably performed by heating the aqueous solution of phosphonium salt and added acid, if any, with removal of water until the concentration is reached such that the solution refluxes at the reaction temperature. In the case of anions X and Y such as chloride, whose acids in water have boiling points under atmospheric pressure at less than 140°C or which form constant boiling mixtures with water below that temperature, the process can be performed under pressure again with removal of byproduct aldehyde and water and addition of water or steam, or alternatively but less preferred in an autoclave or a vessel with means for release of aldehyde.

If desired the aqueous acidic medium of reaction may contain a hydroxylic organic compound of bp at least 140°C eg 140 - 300°C such as 150-200°C. Thus the compound may be of formula $R^7(OH)_a$wherein a is 2-4 eg 2 or 3, and $R^7$ is an alkylene groups of 2-4 carbons or a trivalent hydrocarbyl group of 3-6 carbons. The compound may be ethylene, - propylene - or butylene - glycol or glycerol. The hydroxylic

compound is preferably a 1,2 - diol, as such compounds help to evaporate byproduct aldehyde. Amounts of the hydroxylic compound may be 1-40% eg 5-20% of the weight of aqueous medium excluding said compound). The presence of the hydroxylic compound may be preferred when the anions X and if present Y are oxygen free anions such as chloride. Alternatively if desired the aqueous acidic medium may contain in amounts of 1-40% a carboxylic acid eg of 3-20 carbon atoms, instead of or as well as the hydroxylic compound. In these cases hydroxyl groups in the phosphorus product may be esterified. The carboxylic acid may be of formula $R^9$ CO OH wherein $R^9$ is an alkylor alkenyl group of 3-20 carbons, such as propionic, lauric or stearic acid. Preferably however the aqueous acidic medium is substantially free of added organic solvent. The reaction may be performed if desired under an inert atmosphere e.g. of nitrogen or argon, or may be performed in air. The process may be performed batchwise with a fresh charge of phosphonium compound and added acid (if any) being heated in a reactor. Alternatively the process may be performed with a first batch of phosphonium compound to produce the product, none of which or usually up to a significant proportion of which eg up to 90% such as 40-80%, can then be transferred to another vessel as reaction product, to leave behind a heel of product comprising phosphine oxide and acid, and then a fresh charge of phosphonium compound may be added and the process repeated; reaction in the presence of preformed phosphine oxide product may increase the overall purity and/or yield of product. This approach may be used with several reactors in series to provide a continuous process. The reaction may be semi-continuous or continuous with the phosphine, aldehyde and acid reagents needed to make the phosphonium salt being passed in an inert atmosphere directly into a heated reactor containing reaction product at least 120°C to produce the phosphine oxide which overflows continuously, or alternatively the reagents may be passed into a first heated reactor at less than 100°C to form the salt and this is then passed to a second reactor at higher temperature to form the phosphine oxide; if desired in the latter process the phosphine compound may also be passed into the second reactor to react with and form more phosphonium salt. The progress of the reaction can be followed by chromatography nuclear magnetic resonance spectroscopy or by periodic sampling and titration of a neutralized sample for organic phosphine e.g. by iodine titration in disodium phosphate buffer.

At the end of the reaction the phosphine oxide is usually recovered from the strongly acid reaction medium in which it may be at least partially protonated . The reaction medium may contain the desired product as essentially the only type of phosphorus containing compound, but may also contain in the case of hydroxy alkyl phosphine oxides, esterified derivatives thereof with the acid e.g. sulphate esters. At the end of the reaction the reaction mixture may be diluted with water to give an acid concentration e.g. 1-5N acid and then the diluted solution may be heated e.g. boiled under reflux for 0.5-10 hours; this heating may hydrolyse any such esters present. The method of isolation of the reaction product depends on its solubility. Thus the reaction medium as such, or after dilution with water with or without the hydrolysis, may be cooled and any reaction product which crystallized out can be recovered or alternatively reaction product can be extracted with an organic water immiscible solvent or after at least partial neutralizing of the acidic reaction medium. Such methods are particularly suitable for phosphine oxide products of low water solubility such as ones with large alkyl chains or no free hydroxyl groups e.g. dodecyl dimethyl phosphine oxide. For phosphine oxides which are soluble in water to a significant extent such as ones in which both $R^1$ and $R^2$ are hydroxy alkyl especially hydroxymethyl, at the end of the reaction, the acidic medium, after dilution with water and hydrolysis if desired, may be substantially deacidified e.g. by deionization by passing down an anion exchange resin in the hydroxyl form or addition of calcium carbonate and separation of insoluble calcium salts eg calcium sulphate or phosphate or deacidified by vacuum evaporation of a volatile acid; after the deacidification the solution may be concentrated to remove at least the majority of the water. The deionization may be performed on the diluted acidic reaction mixture as such or after at least partial neutralization with a base especially a volatile base such as ammonia. Alternatively the acidic reaction medium can be neutralized and the phosphine oxide recovered from the medium of high ionic strength by extraction with a water immiscible organic solvent followed by separation and evaporation of the solvent. Polymeric phosphine oxides may simply be filtered from the acidic reaction medium and washed with water.

A substantial conversion often an essentially complete conversion of starting material can usually be achieved with a yield of at least 80% often at least 94% of substantially pure phosphine oxide. The phosphine oxide can be crystallized or recrystallized by use of an appropriate solvent to give a big yield often at least 90% yield of isolated crystalline phosphine oxide. However the crude product is often sufficiently pure for its intended use that no further crystallization step is needed.

For many uses as flame retardants hydroxyorganic phosphine oxides in which $R^1$ and or $R^2$ together or separately contain 1 or more hydroxyl groups are wanted as such. However there are some reactions eg in copolymerization with carboxylic esters to form polyesters in which the corresponding acyloxyalkyl

phosphine oxides can be used; the acyl compounds may also be desired as surfactants. These compounds may be made from phosphine oxides made previously by the process of the invention in which at least one of $R^1$ and $R^2$ is a monovalent organic group containing one or more hydroxy substitutent or nucleophilically replaceable substituent such as sulphate or halide, by acylation to produce the corresponding phosphine oxide in which the said substitutent is replaced by an acyloxy substituent. The acylation is preferably by reaction eg at 140-200°C with an anhydride of formula $(R^6CO)_2$ O, and optionally a basic catalyst eg of formula alkali metal $OOCR^8$ where $R^6$ and $R^8$, which may be the same or different, represent alkyl groups eg of 1-6 carbon atoms such as methyl or other organic groups eg aromatic such as phenyl. Preferably the hydroxy compounds are reacted with acetic anhydride in the presence of potasium or sodium acetate. These conversions to the esters are particularly valuable when the hydroxy compounds were made from onium salts in the presence of halide or carboxylate anions X and Y, as in these cases any byproduct halo alkyl substituted phosphorous compound are converted to esters.

Some of the phosphonium salt starting materials and especially the corresponding phosphine oxides are believed to be novel and these represent a further aspect of the invention. There is thus also provided hydroxyalkyl phosphonium compounds of formula I above, wherein $R^2$ represents a cycloalkyl group eg of 5-7 carbon atoms eg cyclohexyl, and $R^1$ , $R^3$, $R^4$ and $R^5$ are as defined above, or wherein $R^1$ and $R^2$ together form a divalent organic group eg of 4-14 carbons particularly a cyclic divalent group such as 1,5- and 1,4-cyclo octylene or mixtures thereof. $R^2$ (when present) is preferably a hydroxy alkyl eg hydroxy methyl group, and $R^3$ and $R^4$ are preferably hydrogen.

Examples of such compounds are cyclohexyl tris (hydroxymethyl) phosphonium salts eg the neutral and acid sulphates, and 9 - bis (hydroxymethyl) - 9 - phosphonium - bicyclo - 3,3,1 nonyl acid and neutral sulphates and their bicyclo 4 2 1 isomers and mixtures thereof eg with a 70 - 95 : 5-30 ratio of the 331 and 421 isomers. There are also provided the corresponding phosphine oxides ie phosphine oxides of formula II wherein $R^1$ , $R^2$ and $R^3$ are as defined in this paragraph. Examples are cyclohexyl (hydroxymethyl) methyl phosphine oxide and 9 - methyl - 9 - phospho - bicylo - 331 - nonane P -oxide and its 421 isomer and mixtures thereof eg with 70-95% 3,3,1 isomer and 5-30% of 4 2 1 isomer. The above bicyclo nonane 331 phosphonium isomer can be separated from the 421 isomer by performing the process of the invention for a short period eg 5-20 hr such as 10-15 hr at 140-160° in which time the 421 isomer reacts substantially to completion but the 331 isomer is largely unreacted (it may need 150-250 hr), so the unreacted 331 isomer can be recovered from the reaction solution by separation from phosphine oxide product.

The invention is illustrated in the following Examples in which the aqueous solution of THP sulphate (-$(THP)_2 SO_4$) was made by reacting phosphine, formaldehyde and sulphuric acid to give a solution containing 75% by weight THP Sulphate. P-31 nmr spectra peaks are given relative to phosphoric acid as zero.

Example 1

The aqueous solution of THP sulphate (800g) was heated to reflux in a flask fitted with a condenser and Dean and Stark head from which distillate could be removed or returned to the flask. Aqueous formaldehyde distillate (183 ml) was removed from the head until the reaction liquid temperature reached 148°C, which took 2 hours. The reaction liquid was strongly acidic. The reaction liquid was then distilled with collection and periodic removal of aqueous formaldehyde distillate from the Dean and Stark head and periodic addition of water in equal volume back to the flask in order to keep the reaction temperature at 155-165°C. Periodically samples were taken and the progress of the reaction monitored by iodine titration in disodium phosphate buffer solution. After 7.5 hours at least 99% of the phosphonium salt had been converted.

The reaction was continued as before with distillation and return for a further 3.5 hours at 160-170°C to give an almost colourless reaction product solution containing sulphuric acid values and water. At the end of the 11 hour heating the volume of distillate was 1320 ml and it contained 94g of formaldehyde.

The solution was allowed to cool and then poured into water (2 litres) and the diluted solution refluxed for 3 hours, and cooled before addition of calcium carbonate to substantial neutralisation. The calcium sulphate precipitate and unreacted calcium carbonate were removed from the solution by filtration and the filtrate evaporated under reduced pressure to leave a residue which was mixed with ethanol and the solution refiltered and the filtrate evaporated under reduced pressure to leave a product (348g, 95% yield) which crystallized to form a solid m.p. 71-2°C (bis (hydroxymethyl) methylphosphineoxide reported m.p. 71°C). P n.m.r. showed the product to be at least 97% pure bis (hydroxymethyl) methylphosphine oxide.

## Example 2

The process of Example 1 was repeated with an initial solution of the THP sulphate solution (600g), water (90 ml) and 98% concentrated sulphuric acid (314g), and heating with removal of distillate and addition of water at a reaction temperature of 138-143°C for 17 hr. The aqueous distillate (1400 ml) contained formaldehyde (62.5g). The reaction product solution contained 47% sulphuric acid values and a molar ratio of water to sulphate values of 1.8:1. After cooling this solution, dilution with water, and refluxing for 3 hours as in Example 1, the diluted solution was desulphated by deionization rather than treatment with calcium carbonate. The diluted solution was passed down a column of anion exchange resin in the hydroxyl form (Amberlite IRA 400 resin) followed by elution with water. The eluate was evaporated under reduced pressure to leave an almost colourless viscous oil (261g, 95.5% yield) which solidified after pouring onto a metal tray, seeding and cooling. The solid had m.p. 72-3°C and P n.m.r. on the solid showed it to be substantially pure bis (hydroxymethyl) methylphosphine oxide.

## Example 3

The process of Example 2 was repeated with an initial solution of the THP sulphate solution (600g) and concentrated sulphuric acid (220g). The solution was heated as before and once the liquid temperature reached 145°C water was added periodically to the reaction liquid to compensate for the aqueous formaldehyde distillate thereafter collected and periodically removed and to maintain the reaction temperature at 140-145°C. Periodic sampling of the reaction liquid showed that the reaction was complete after 14 hours at which time the reaction liquid contained 41.5% sulphuric acid values and a molar ratio of water to sulphate values of 1.48:1.

The distillate (1290 ml) contained formaldehyde (63g). When cool the reaction liquid was diluted with water and refluxed as in Example 2. To the solution obtained after cooling was added a slight excess of calcium carbonate to neutralization, and then the precipitated solids of calcium sulphate were separated by filtration. The filtrate was evaporated under reduced pressure and treated as in Example 1 to give product (266g, 97% yield) which crystallized readily to give a solid m.p. 71-2°C (m.p. 74°C after recrystallization from methylated spirit). P n.m.r. showed it to be substantially pure bis (hydroxymethyl) methyl phosphine oxide.

## Example 4

The process of E x 1 was repeated with a 76% aqueous solution (304g) of bis THP acid phosphate which was heated to reflux and then distilled to a liquid temperature of 146°C to remove 60 ml of aqueous distillate. The liquid was then heated at 145 - 8°C with distillation of aqueous formaldehyde and periodic addition of a corresponding volume of water. Periodic sampling of the reaction liquid showed that the reaction was complete after 21 hr by which time 565 mls distillate had been collected and the reaction liquid contained 26.6% phosphoric acid with a phosphate to water molar ratio of 1:1.27. Water was then added dropwise until the reflux temperature was 120°C, whereafter the solution was refluxed at 120°C for 2 hr and worked up as in Ex1 to give 122g solid mp 64-66°C. P nmr showed it to contain 92% of bis (hydroxymethyl) methyl phosphine oxide.

## Example 5

The process of Ex1 was repeated with 324g of 41.5% aqueous solution of di [cyclohexyl tris (hydroxymethyl) phosphonium] sulphate heated to reflux (101°C) and distilled to remove 162 ml distillate and leave a liquid of boiling point 146°C. The liquid was then heated at 145-50° with distillation and addition of replacement water as in Ex1. The reaction was shown to be complete after 13 hr by which time the liquid contained 28.4% sulphuric acid values with a molar ratio of water to sulphate values of 3.2:1. The reaction liquid was worked up as in Ex1 to leave 93g of a pale brown solid (95% yield). Crystallization from isobutanol gave cyclohexyl(methyl)(hydroxymethyl)phosphine oxide mp 124°C, for which P nmr showed a major peak at - 57.0. The compound can be used as a flame retardant for polymers and an extractant for metals.

Example 6

From a mixture of 100 g of aqueous solution of THP chloride (40g) and conc. hydrochloric acid (0.9ml), was taken 84.3 g, which was put in glass tubes provided with fine capillary exits and heated in an autoclave at 170°C and 10.5 kg./m²(150 psi) pressure for 28 hr. Analysis of the cooled liquid showed that all the THP chloride had reacted. The liquid contained chloride values equivalent to 9.1% hydrogen chloride with a molar ratio of water to chloride values of 15.7:1. The liquid was evaporated under vacuum to leave 22.2g of oil, which Pn mr showed to be 82% bis (hydroxymethyl) methyl phosphine oxide. The oil was dissolved in water, neutralized with sodium hydroxide solution to give a solution which was evaporated to dryness, treated with alcohol and sodium chloride filtered off prior to re-evaporation to leave 17g of impure bis (hydroxymethyl) methyl phosphine oxide mp 50-54°C (88% pure by P n m r). Impure phosphine oxide (5.4g) was reacted at about 135°C for 2.5 hr with acetic anhydride (30 ml) in the presence of potassium acetate (4g) to form the corresponding methyl bis (acetoxymethyl) phosphine oxide, 93% pure by P n m r."

Example 7

A mixture of di [9 - bis (hydroxymethyl) - 9 - phosphonium bicyclo 3,3,1, nonyl] sulphate and its 4,2,1 isomer (in 79:21 molar ratio) mp 200° was made by reacting phosphine with cyclo octadiene to give a mixture of 9 - phosphobicyclo (3,3,1) nonane and its 4,2,1 isomer, and then reacting the mixture with aqueous formaldehyde and sulphuric acid followed by recrystallization from ethanol as solid mp 200°C nmr showed a major peak at -23.0 for the 331 isomer and -55.2 for the 421 isomer)

(i) 126.5 g of the mixture 26.5ml conc sulphuric acid and 50ml water was heated and water (10ml) was evaporated until the temperature reached 150°C, whereupon the solution was reacted at 150°C as in Ex1. After 200 hr distillation and addition of replacement water the reaction has gone to completion to leave a liquid containing 36.5 % of sulphuric acid values with a molar ratio of water to sulphate values of 3 : 1. The liquid was worked up as in Ex1 to give 75.1g of a mixture of 9 - methyl 9 - phospho bicyclo 331 nonane P-oxide and its 4 2 1 isomer (mp 158° after recrystallization) in 90:10 molar ratio (from P n m r), with peaks at - 56.4 for the 331 isomer and -88.4 for the 421 isomer. The phosphine oxide can be used as a n extractant for metals.

(ii) The process of (i) was repeated with heating for 12 hour at 150°C only, by which time analysis of the liquid showed that essentially all the 4 2 1 isomer had reacted but very little of the 3 3 1 isomer. The liquid contained 36.5 % sulphuric acid values with a molar ratio of water to sulphate values of 3:1. The liquid was worked up to separate the unreacted 331 phosphonium sulphate from the mixture of 331 and 421 phosphine oxide product via removal of excess sulphate with calcium, evaporation and crystallization to give crystals of di 9 - bis (hydroxymethyl) 9 - phosphonium bicyclo 3 3 1 nonane] sulphate mp 240°C, shown by P nmr to be 98 % pure.

Example 8

The process of EX 1 was repeated with the THP sulphate solution (1005g), initial evaporation to 152°C liquid temperature, followed by distillation of water and formaldehyde and return of water to keep the temperature in the range of 146-152°C. After 13.5 hr of this distillation and return operation, there was distillate (1588ml) containing formaldehyde (146g) and a liquid, for which titration showed that essentially all the phosphonium compound had reacted. The distillation and return were continued for a further 4 hours at 150°C to give distillate (450ml) containing formaldehyde (2.7g) and a product liquid containing 28.6% sulphuric acid values and a water to sulphate values molar ratio of 1.04:1. The product liquid was worked up as in Example 1 to give 458g of bis (hydroxymethyl) methyl phosphine oxide mp 70-71° 95% pure by P n m r.

Example 9

The reaction process of EX1 was repeated with the aqueous THP sulphate solution (2163g), initial evaporation to a 146°C liquid temperature and then the liquid maintained at 144-148°C for 13 hr with distillation of water and formaldehyde and return of water. There was produced distillate (3630ml) containing formaldehyde (254.5g) and a product liquid in which the reaction had been completed. The distillation and

return were continued at 144-8°C for 2hr to give distillate (500ml) containing formaldehyde (3.75g) and a product liquid (1422g) containing 27% sulphuric acid values and a molar ratio of water to sulphate values of 1.03:1.

The product liquid (1422g) was mixed with more of the aqueous THP sulphate solution (4748g) and then the evaporation, followed by the distillation and return of water continuously were repeated with the liquid maintained at 145-150°C over 12 hr to give a distillate (10.61) containing formaldehyde (567g) and liquid in which titration showed the reaction to be complete. The distillation and return were continued for a further 3 hr to give distillate (213ml) containing formaldehyde (9.5g) and a liquid containing 27% sulphuric acid values and a molar ratio of water to sulphate values of 1.03:1. About two thirds of the liquid was removed as product and the rest used as heel for the next reaction cycle. The process was repeated several times with a total of extra fresh aqueous THP solution of (13.5 kg). The product liquids were combined and worked up as in Ex1 to leave bis (hydroxymethyl) methyl phosphine oxide (9:1 kg) mp 71°C, 97% pure by P n m r.

## Claims

1. A process for preparing a phosphine oxide by heating a hydroxyalkylphosphonium compound, wherein a hydroxyalkyl phosphonium of formula I.

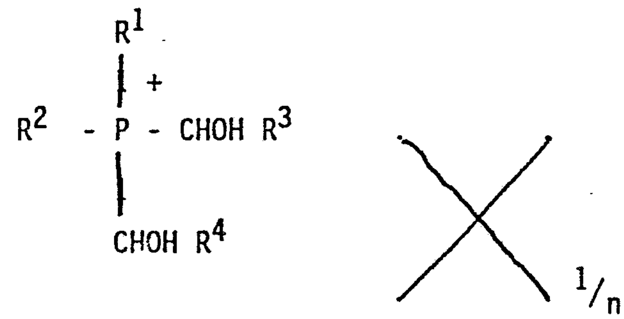

in which $R^1$ represents a monovalent organic group or a group of formula

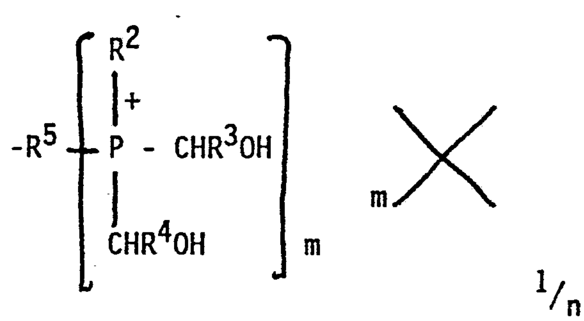

and $R^2$ represents a monovalent organic group or $R^1$ and $R^2$ together form a divalent organic group, each of $R^3$ and $R^4$ which may be the same or different, represents hydrogen or an alkyl group, $R^5$ is an organic group having m + 1 free valencies, m is an integer of at least 1, n is the valency of the anion X, and X represents hydroxyl or an anion from an acid of formula $H_nX$ is heated at a temperature of at least 120°C in an aqueous acid medium with removal of at least some byproduct aldehyde to produce a reaction mixture comprising a phosphine oxide of formula II.

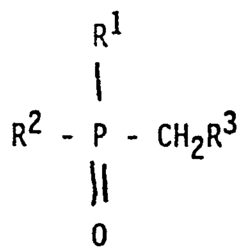

2. A process according to claim 1 wherein the heating removes byproduct aldehyde and water, and extra water is added to the aqueous medium to maintain substantially constant temperature.

3. A process according to claim 1 or 2 wherein the reaction is performed in the presence of added acid of formula $H_nY$ where Y is as defined for X apart from hydroxyl.

4. A process according to any one of claims 1-3 wherein the reaction mixture is halogen free and at the end of the reaction contains 5-60% of acid.

5. A process according to any one of claims 1 - 3 wherein at least one of X and Y is chloride and at the end of the reaction the reaction solution contains less than 20% hydrochloric acid.

6. A process according to any of claims 1 - 4 wherein X is the anion of a weakly nucleophilic strong acid.

7. A process according to any one of claims 1 - 4 wherein X is the anion of a divalent or trivalent inorganic acid.

8. A process according to claim 6 or 7 wherein X is the sulphate anion.

9. A process according to any one of the preceding claims wherein the hydroxyalkyl phosphonium compound is heated at a temperature of 130-180°C.

10. A process according to claim 9 wherein the heating is at 140-175°C.

11. A process according to any one of the preceding claims wherein each of $R^3$ and $R^4$ is hydrogen or methyl.

12. A process according to any one of the preceding claims wherein $R^1$ is a hydroxyalkyl or cyclohexyl group and $R^2$ is a hydroxyalkyl group.

13. A process according to claim 11 wherein the phosphonium compound is a tetra kis (hydroxymethyl) phosphonium compound.

14. A process according to any one of claims 8 - 13 wherein anion X is a sulphate anion and the molar ratio of water to sulphate during the reaction is 0.5-5:1.

15. A process according to any one of claims 5 or 9 - 13 wherein anion X is chloride and the molar ratio of water to chloride during the reaction is 12-32:1.

16. A process according to any one of claims 1 - 15 wherein the aqueous reaction medium contains a hydroxylic compound of boiling point at least 140°C.

17. A process according to any one of the preceding claims wherein to at least a portion of the reaction mixture comprising said phosphine oxide and acid from X and Y if present is added further of said phosphonium compound and the process repeated.

18. A process according to any one of claims 1-17 wherein the reaction mixture contains a phosphine oxide of formula $R^1$ $R^2$ PO $CH_2R^3$, in which at least one of $R^1$ and $R^2$ is a monovalent organic group containing one or more hydroxy substituents or nucleophilically replaceable substitutents, and is acylated to produce a corresponding phosphine oxide in which the said substituent is replaced by a acyloxy substituent.

19. A phosphine oxide of formula

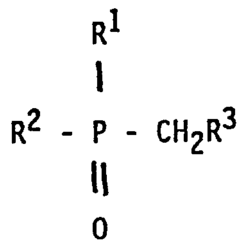

wherein $R^1$ represents a monovalent organic group, $R^2$ represents a cycloalkyl group, or $R^1$ and $R^2$ together

form a divalent organic group and $R^3$ represents hydrogen or an alkyl group.

20. A phosphine oxide according to claim 19 wherein $R^1$ represents a hydroxyalkyl group.

21. Cyclohexyl (hydroxymethyl) methyl phosphine oxide.

22. 9 - methyl - 9 - phospho - bicyclo-3,3,1-nonane P oxide, 9 - methyl - 9 - phospho -bicyclo 4,2,1 nonane P oxide or a mixture thereof.

23. A hydroxyalkyl phosphonium compound of formula.

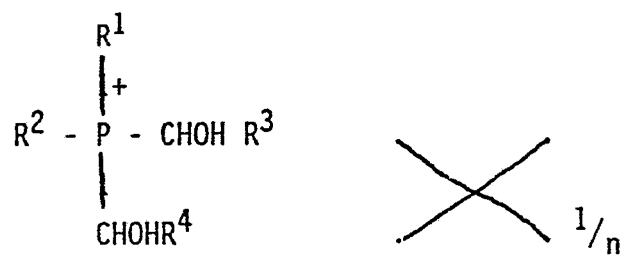

wherein $R^1$ represents a monovalent organic group and $R^2$ represents a cycloalkyl group or $R^1$ and $R^2$ together form a divalent organic group each of $R^3$ and $R^4$, which may be the same or different, represents hydrogen or an alkyl group, X represents hydroxyl or an anion from an acid of formula $H_nX$, and n is the valency of the anion X.

24. A phosphonium compound according to claim 23 wherein $R^1$ represents hydroxyalkyl group.

25. Cyclohexyl tris (hydroxymethyl) phosphonium sulphate.

26. 99 - bis (hydroxymethyl) - 9 - phosphonium - bicyclo 3,3,1 nonane sulphate, 9,9 - bis (hydroxymethyl) - 9 - phosphonium -bicyclo 4,2,1 nonane sulphate and mixtures thereof.